# EUROPÄISCHE PATENTSCHRIFT

(11) **EP 4 436 368 B1**
(45) Veröffentlichungstag und Bekanntmachung des Hinweises auf die Patenterteilung: **08.07.2026**
(21) Anmeldenummer: 22818000.6
(22) Anmeldetag: 15.11.2022
(51) Int. Cl.: A01K 1/01, A01K 1/015, A01K 5/00

(54) **FAHRROBOTER FÜR LANDWIRTSCHAFTLICHE AUFGABEN**
DRIVING AGRICULTURAL ROBOT
ROBOT ROULANT AGRICOLE

(30) Priorität: 26.11.2021 DE 102021131077
(43) Veröffentlichungstag der Anmeldung: 02.10.2024
(73) Patentinhaber: GEA Farm Technologies GmbH, 59199 Bönen (DE)
(72) Erfinder: SCHWENKER, Alexander, 58239 Schwerte (DE); HAUPT, Tobias, 59427 Unna (DE)
(74) Vertreter: Kleine, Hubertus
(86) Internationale Anmeldenummer: PCT/EP2022/082043
(87) Internationale Veröffentlichungsnummer: WO 2023/094226

(56) Entgegenhaltungen:
- WO-A1-2008/097080
- WO-A1-2018/234374

## Beschreibung

Die Erfindung betrifft einen Fahrroboter für landwirtschaftliche Aufgaben, insbesondere in einem Stall- oder Hofbereich. Der Fahrroboter weist ein Fahrgestell und eine darauf angeordnete austauschbare Funktionseinheit auf. Dabei stellt das Fahrgestell Auflager bereit, die die Funktionseinheit tragen, wobei für mindestens eines der Auflager ein Kraftsensor vorhanden ist, der eine durch die Funktionseinheit auf das Fahrgestell ausgeübte Kraft erfasst.

Viele Aufgaben in einem Stall- oder Hofbereich eines landwirtschaftlichen Betriebs sind mit einem Transport von Materialien verknüpft. Beispielsweise werden zur Fütterung von Tieren häufig Fütterungssysteme eingesetzt, bei denen in einem zentralen Bereich, der sog. "Küche", Futterrationen aus verschiedenen vorgehaltenen Grundzutaten bedarfsgerecht und zeitnah gemischt und zur Fütterung der Tiere entlang sog. "Futtergassen" ausgebracht werden. Ein anderes Beispiel betrifft einen Abtransport von Tierexkrementen. Auch eine Reinigung von Hof- oder Stallflächen wird aufgrund der Größe der Flächen in der Regel mithilfe von Fahrzeugen ausgeführt.

Um diese Aufgaben möglichst autonom und mit geringem Personaleinsatz ausführen zu können, haben sich automatisierte Anlagen und Geräte für diese unterschiedlichen Anwendungsfälle im landwirtschaftlichen Bereich etabliert.

Aus der Druckschrift WO 2008/097080 A1 ist beispielsweise ein autonom arbeitendes Fütterungssystem für Tiere, beispielsweise Kühe, bekannt. Eine zentrale Komponente dieses Systems ist ein autonom fahrendes Fahrzeug, das einen Mischbehälter aufweist, der in einem zentralen sog. "Küchenbereich" automatisch befüllt werden kann. Der Behälter des Fahrzeugs ist auf dem Fahrzeug dreh- und kippbar gelagert. Eine Drehbewegung des Behälters sorgt in Verbindung mit einer an den Behälterwänden ausgebildeten spiralförmigen Struktur für ein Mischen des Futters während der Fahrt von den Futtercontainern bis zur Abladestelle des Futters. An dieser wird Futter automatisch durch ein Abkippen des Behälters abgegeben. Für die Stromversorgung sowohl für den Fahrbetrieb des Fahrzeugs, als auch für das Mischen und Ausbringen des Futters sind Batterien auf dem Fahrzeug angeordnet. Im Hinblick auf die Bewegung des Fahrzeugs sind verschiedene Optionen beschrieben, beispielsweise, dass der Weg über zuvor verlegte Schienen vorgegeben ist. Als andere Alternative ist eine autonome Navigation mithilfe von Sensoren oder Wegmarkierungen beschrieben. Auch eine Navigation basierend auf einem Funk-Positionssystem, beispielsweise dem GPS (Global Positioning System) ist beschrieben.

Weiter ist angegeben, dass das autonom fahrende Fahrzeug ein integriertes Wägesystem aufweist, um eine aufgenommene bzw. abgegebene Futtermenge zu erfassen.

Aus der Druckschrift WO 2016/023716 A1 ist ein autonom fahrender Roboter bekannt, der einen Bereich, in dem sich Tiere auf dem Hof frei bewegen können, nach Exkrementen absucht, diese einsammelt und an einer Sammelstelle wieder ablädt.

Die Druckschrift EP 2 007 191 A1 offenbart einen autonom fahrenden Roboter, der genutzt wird, um bereits in einer Futtergasse abgeladenes Futter in regelmäßigen Abständen zusammenzuschieben und somit wieder in den Bereich zu schieben, in dem das Futter von den Tieren zum Fressen erreicht werden kann.

Die genannten Beispiele zeigen unterschiedliche Aufgaben, die mithilfe von autonom fahrenden Fahrzeugen im Stall- und Hofbereich eines landwirtschaftlichen Betriebs erledigt werden. In den bekannten Fällen werden jeweils speziell für die unterschiedlichen Anwendungszwecke eingerichtete autonome Fahrzeuge eingesetzt, was nicht nur kosten- und materialaufwendig ist, sondern auch einen hohen Aufwand an Wartung und Anlernvorgängen für die autonomen Fahrzeuge erfordert, wenn im selben Stall- und Hofbereich mehrere unterschiedliche autonome Fahrzeuge eingesetzt werden.

Es ist eine Aufgabe der vorliegenden Erfindung, ein möglichst universell einzusetzendes autonomes Fahrzeug zur Durchführung von Aufgaben im Stall- und Hofbereich eines landwirtschaftlichen Betriebs zu schaffen.

Diese Aufgabe wird durch ein autonom fahrendes Fahrzeug mit den Merkmalen des unabhängigen Anspruchs gelöst. Vorteilhafte Ausgestaltung und Weiterbildung sind Gegenstand der abhängigen Ansprüche.

Der Fahrroboter ist durch die austauschbare Funktionseinheit universell verwendbar. Sowohl für den Hersteller als auch für den Nutzer werden Kosten und Lager- bzw. Stellplatz eingespart, da ein einzelnes Fahrgestell mit verschiedenen Funktionseinheiten verwendet werden kann, die unterschiedliche Funktionalität bereitstellen. Dieses ist möglich, da üblicherweise nicht alle der vorgehaltenen Funktionseinheiten zugleich autonom mobil eingesetzt werden müssen.

Zusätzlich zu den Auflagern ist erfindungsgemäß mindestens ein Schwenklager zwischen dem Fahrgestell und der Funktionseinheit vorhanden, das bedarfsweise einsetzbar ist, um die Funktionseinheit bei gelöster Verbindung zu den Auflagern auf dem Fahrgestell zu kippen. Dieses kann manuell oder auch durch einen am Fahrroboter vorhandenen Antrieb erfolgen. Insbesondere zu Servicezwecken kann es vorteilhaft sein, dass die Funktionseinheit nicht komplett abgenommen wird, sondern an den Schwenklagern zu Seite gekippt wird, um Zugang zu ansonsten verdeckten Komponenten der Funktionseinheit und/oder sonstiger Teile des Aufbaus und/oder des Fahrgestells zu erhalten.

Durch die Kraftsensoren kann dann statisch die von der Funktionseinheit auf das Fahrgestell wirkende Gewichtskraft gemessen werden. Auf diese Weise kann der Vorgang des Aufsetzens- bzw. Abnehmens der Funktionseinheit vom Fahrroboter selbst überwacht werden. Auch kann eine Gewichtsänderung der Funktionseinheit, z.B. bei einem Aufladen- oder Abladen von transportierten Gütern, erfasst werden.

Weiter können die Kraftsensoren eingesetzt werden, um sich während des Fahrbetriebs dynamisch ändernde Kräfte bzw. Kräfteverhältnisse zu ermitteln. Diese können Aufschluss geben z. B. über Neigungen des Fahrroboters in Längs- und auch in Querrichtung und auch über Bodenunebenheiten. Weiter können Beschleunigungen erfasst werden, was unterstützend zu odometrischen Daten der Navigation des Fahrroboters dienen kann.

In einer vorteilhaften Ausgestaltung ist der Fahrroboter als Fütterungsroboter ausgebildet, indem die Funktionseinheit mindestens einen Behälter zur Aufnahme von Futter aufweist. Bevorzugt ist der Behälter als Mischbehälter ausgebildet und weist eine Mischeinrichtung auf. Weiter bevorzugt ist der Behälter mit einem Futterförderer gekoppelt ist, um Futter aus dem Behälter auszubringen. Der Futterförderer kann ein Förderband umfassen, das bevorzugt quer zur Fahrtrichtung des Fütterungsroboters ausgerichtet ist und Futter zu beiden Seiten des Roboters ausbringen kann.

Der Fütterungsroboter kann aus Silos oder ähnlichen Speichern Futter komponentenweise aufnehmen, mischen und autonom zu einem oder mehreren Futterplätzen transportieren und dort ausbringen. Bei bekanntem Leergewicht der Funktionseinheit kann mithilfe der Kraftsensoren jederzeit die sich im Behälter befindende Masse an Futter ermittelt werden. Änderungen der Messwerte geben Aufschluss über aufgenommene und/oder abgegebene Futtermengen.

In alternativen Ausgestaltungen kann der Fahrroboter durch eine entsprechende Funktionseinheit als Reinigungsroboter, als Einstreuroboter für Stroh o.ä. oder als universeller Transportroboter ausgebildet sein.

In einer weiteren vorteilhaften Ausgestaltung weist der Fahrroboter mindestens drei Auflager auf, denen jeweils ein Kraftsensor zugeordnet ist. Weiter vorteilhaft führt die von der Funktionseinheit auf das Fahrgestell wirkende Kraft im Wesentlichen vollständig über die Auflager, wodurch sichergestellt ist, dass die Kraftsensoren die Kraft korrekt erfassen. Die Auflager können Lagerplatten aufweisen, auf denen die Funktionseinheit aufliegt.

Eine Verbindung zwischen den Auflagern und der Funktionseinheit kann bevorzugt mithilfe von Aktoren angesteuert, geschlossen und/oder gelöst werden. So kann erreicht werden, dass ein Fahrroboter in einer Wechselstation oder -zone selbstständig und automatisiert zwischen verschiedenen Funktionseinheiten bedarfsweise wechselt.

In einer weiteren vorteilhaften Ausgestaltung weist das Fahrgestell des Fahrroboters ein Aufliegerchassis und ein Zugchassis auf, wobei das Aufliegerchassis in einem Schwenklager auf dem Zugchassis aufliegt. Bevorzugt weist das Aufliegerchassis ein Schwenkrad auf und das Zugchassis mindestens zwei Antriebsräder und ein weiteres Schwenkrad.

Die drei Räder des Zugchassis stellen drei Auflagepunkte des Zugchassis auf den Untergrund dar. Da durch drei Punkte eine Ebene geometrisch bestimmt, aber nicht überbestimmt ist, ist gewährleistet, dass die drei Räder jederzeit Bodenkontakt haben. Somit wird ein sicherer Antrieb und eine gute Abstützung auch auf einem unebenen Untergrund eines landwirtschaftlichen Betriebs erreicht.

Durch das Schwenklager zwischen dem Zugchassis und dem Aufliegerchassis können diese beiden um eine Achse des Schwenklagers zueinander pendeln. Die Achse des Schwenklagers ist bevorzugt horizontal und quer zur Fahrtrichtung ausgerichtet. Auf diese Weise können in Längsrichtung bestehende Unebenheiten des Untergrunds von der Kombination aus Zugchassis und Aufliegerchassis bestmöglich ausgeglichen werden, wobei ein sicherer Bodenkontakt aller Räder gewährleistet ist.

Die Erfindung wird nachfolgend anhand von Ausführungsbeispielen mithilfe von Figuren näher erläutert. Die Figuren zeigen:
- Fig. 1a, b: jeweils eine Schrägansicht eines ersten Ausführungsbeispiels eines Fahrroboters aus verschiedenen Blickrichtungen;
- Fig. 2a-f: verschiedene Ansichten des Fahrroboters gemäß den Fig. 1a, b ohne Verkleidung;
- Fig. 3: eine Schrägansicht in Art einer Explosionsdarstellung eines Teils eines Fahrgestells des Fahrroboters der vorherigen Figuren;
- Fig. 4: eine Schrägansicht des Fahrgestells des Fahrroboters der vorherigen Figuren;
- Fig. 5a-c: jeweils eine Schrägansicht des Fahrroboters der vorherigen Figuren mit abgekippter Funktionseinheit aus verschiedenen Blickrichtungen;
- Fig. 6: eine Schrägansicht eines zweiten Ausführungsbeispiels eines Fahrroboters; und
- Fig. 7: eine Schrägansicht eines dritten Ausführungsbeispiels eines Fahrroboters.

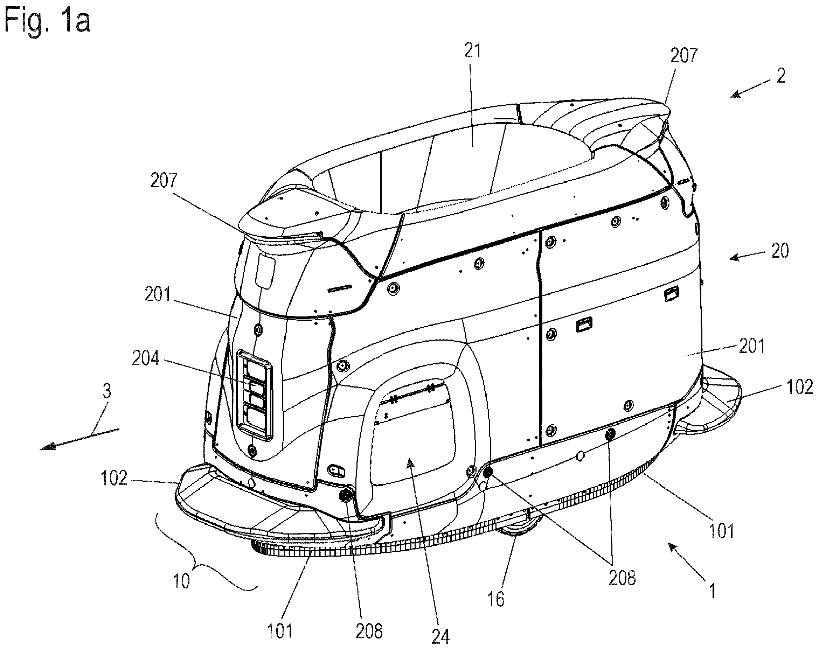

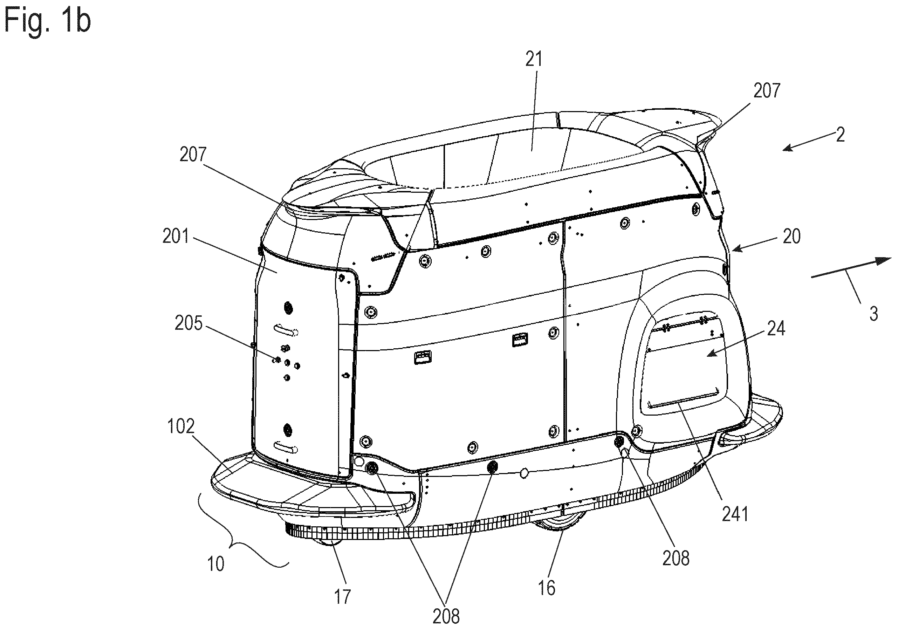

In den Figuren 1a und 1b ist ein Ausführungsbeispiel eine Fahrroboters für landwirtschaftliche Aufgaben in einer Gesamtansicht aus unterschiedlichen Blickrichtungen dargestellt.

Der Fahrroboter dieses Ausführungsbeispiels ist ein sog. "Fütterungsroboter", der dazu eingerichtet ist, Futter von einer Ausgabestelle aufzunehmen, selbsttätig zu mischen und an einer oder mehreren Futterstellen abzuladen. Der Fahrroboter wird daher nachfolgend auch als "Fütterungsroboter" oder einfach "Roboter" bezeichnet.

Gleiche Bezugszeichen kennzeichnen in allen Figuren gleiche oder gleich wirkende Elemente. Aus Gründen der Übersicht ist nicht in jeder Figur jedes Element mit einem Bezugszeichen versehen. In der Beschreibung beziehen sich die Angaben "rechts" und "links" auf die jeweilige Darstellung der Figur. Die Begriffe "oben" und "unten" beziehen sich dagegen auf die natürliche Ausrichtung des Fahrroboters. Die Begriffe "vorne" und "hinten" sind auf eine Vorwärts-Fahrtrichtung des Fahrroboters bezogen. Die Vorwärts-Fahrtrichtung stellt die Haupt-Fahrtrichtung des Fahrroboters dar.

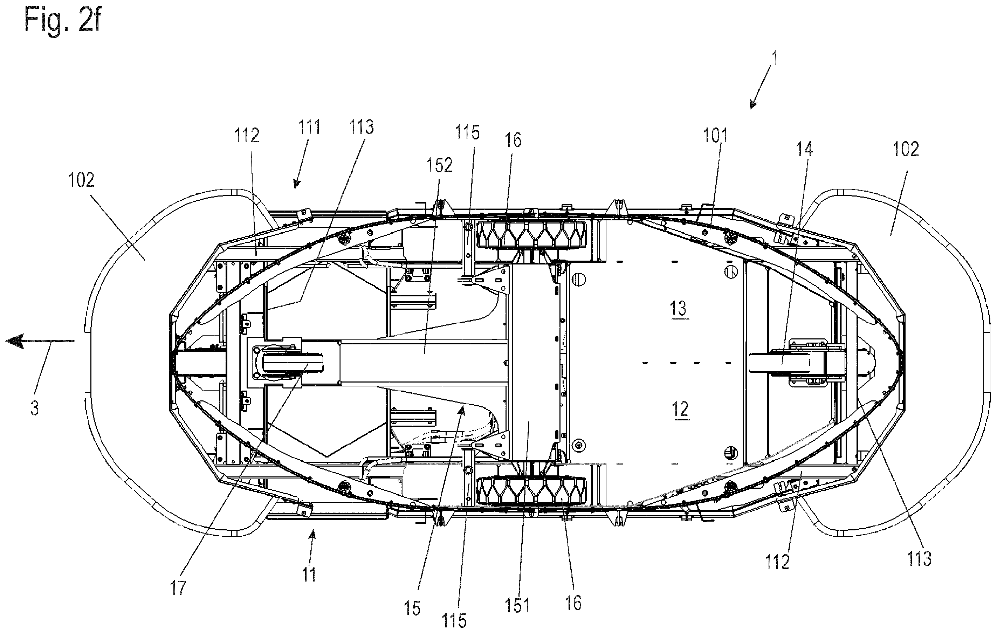

Der Fahrroboter weist zwei maßgebliche Komponenten auf, ein Fahrgestell 1 und einen Aufbau 2. Ein Richtungspfeil 3 kennzeichnet in den Figuren die Vorwärts-Fahrtrichtung. Das Fahrgestell 1 ist universell einsetzbar und kann, wie weiter unten noch genauer erläutert wird, zusammen mit verschiedenen Funktionseinheiten eingesetzt werden. Vom Fahrgestell 1 sind in den Fig. 1a, b lediglich Verkleidungs- und/oder Schutzelemente 10, konkret eine umlaufende Schürze 101 sowie zwei Stoßstangen 102 zu sehen, sowie eines von insgesamt vier Rädern, konkret ein Antriebsrad 16. Beim vorliegenden Ausführungsbeispiel eines Futterroboters fungiert die Schürze 101 zudem als Futterschieber, wie im Zusammenhang mit Figur 2f noch genauer erläutert wird.

Der Aufbau 2 bestimmt im Wesentlichen die Funktionalität des Fahrroboters und damit seinen Einsatzzweck innerhalb des Stall- oder Hofbereichs.

Bei dem im vorliegenden Fall als Fütterungsroboter ausgestatteten Fahrroboter umfasst der Aufbau 2 als eine maßgebliche Komponente einen Mischbehälter 21 auf. In den Mischbehälter 21 wird das zu verteilende Futter aufgenommen und kann ggf. mithilfe einer Mischeinrichtung, die in den Fig. 1a und 1b nicht sichtbar ist, bereits beim Befüllen und während der Fahrt durchmischt werden. Zum Ausbringen des Futters ist ein Futterförderer 24 vorhanden, der mithilfe eines Förderbandes 241 umgesetzt ist. Je nach Laufrichtung des Förderbandes 241 kann Futter zu einer von beiden Seiten des Fütterungsroboters ausgebracht werden. Die Anordnung des Mischbehälters 21 und des Futterförderers 24 stellen die Funktionseinheit des Fahrroboters dar, da sie die spezifische Funktionalität desselben liefern und ihn so als Fütterungsroboter definieren.

Der Aufbau 2 umfasst eine Verkleidung 20, die mithilfe von einer Mehrzahl von Verkleidungselementen, in der Regel Verkleidungsplatten 201 besteht. Die Verkleidungsplatten 201 können bevorzugt separat abgenommen werden, um Zugang zu darunterliegenden Komponenten und deren Wartung oder Austausch zu erhalten. In die Verkleidung 20 sind von außen zugängliche Elemente integriert, beispielsweise Ladekontakte 204 und Bedien- und/oder Anzeigeelemente 205. Der Fahrroboter ist dazu eingerichtet, selbsttätig in eine Ladestation einzufahren, in der die Ladekontakte 204 kontaktiert werden, um Batterien oder andere Stromspeicher des Fahrroboters wieder aufzuladen.

Der Fahrroboter ist mit einem Navigationssystem versehen, das eine Navigation im Stall- oder Hofbereich bevorzugt ohne fest verlegte Infrastrukturelemente wie Schienen oder Leitkabel ermöglicht. Zu diesem Zweck ist der Fahrroboter mit einer Mehrzahl von Sensoren ausgestattet, die entweder in die Verkleidung 20 integriert sind oder aus der Verkleidung 20 hervorragen.

In den Fig. 1a und 1b sind zwei Lidar (Light detection and ranging)-Sensoren 207, die einer Objekterkennung zur Navigationsunterstützung dienen, erkennbar. Die beiden Lidar-Sensoren 207 sind jeweils vorne bzw. hinten am Fahrroboter angeordnet. Alternativ oder zusätzlich kann vorgesehen sein, in Fahrtrichtung vorne und ggf. auch hinten jeweils eine optische Kamera anzuordnen. Die Kameras dienen dann einer ggf. zusätzlichen Unterstützung der Navigation. Die Kameras können nach unten geneigt ausgerichtet sein, um insbesondere den in Fahrtrichtung (bei Vorwärts- und Rückwärtsfahrt) unmittelbar vor dem Fahrroboter liegenden Bodenbereich aufnehmen und damit überwachen zu können. Weiter sind verteilt um den Umfang des Fahrroboters im unteren Bereich der Verkleidung 20 Ultraschallsensoren 208 vorhanden.

Weitere, hier nicht sichtbare Sensoren, sind mechanische Sensoren, die eine Krafteinwirkung auf eine der oder beide Stoßstangen 102 detektieren. Dazu kann die jeweilige Stoßstange 102 beispielsweise beweglich gelagert sein, so dass bei Bewegung gegen eine Federkraft einer von gegebenenfalls mehreren Sensoren betätigt wird. In einer alternativen Ausgestaltung kann die Stoßstange 102 in einem äußeren Bereich aus einem elastisch verformbaren Material gebildet sein, insbesondere einem Schaumstoff, in das ein Sensor eingearbeitet ist, der eine Verformung bevorzugt entlang des gesamten Rands der Stoßstange 102 detektiert. Vorteilhaft wird so eine Kollision mit einem Hindernis gedämpft und gleichzeitig erfasst. In einer Ausgestaltung können beispielsweise zwei voneinander beabstandete Elektroden entlang des Rands der Stoßstange 102 in das elastische Material eingebettet sein, zwischen denen eine Kapazität detektiert wird. Eine Änderung der Kapazität zeigt eine Verformung des Materials an. In einer weiteren Ausgestaltung kann eine Zugkette in das elastische Material eingearbeitet sein, die mit einem Schalter bzw. Sensor gekoppelt ist. Eine Verformung des elastischen Materials führt zu einem Zug an der Zugkette, der über den Schalter bzw. Sensor erfasst wird.

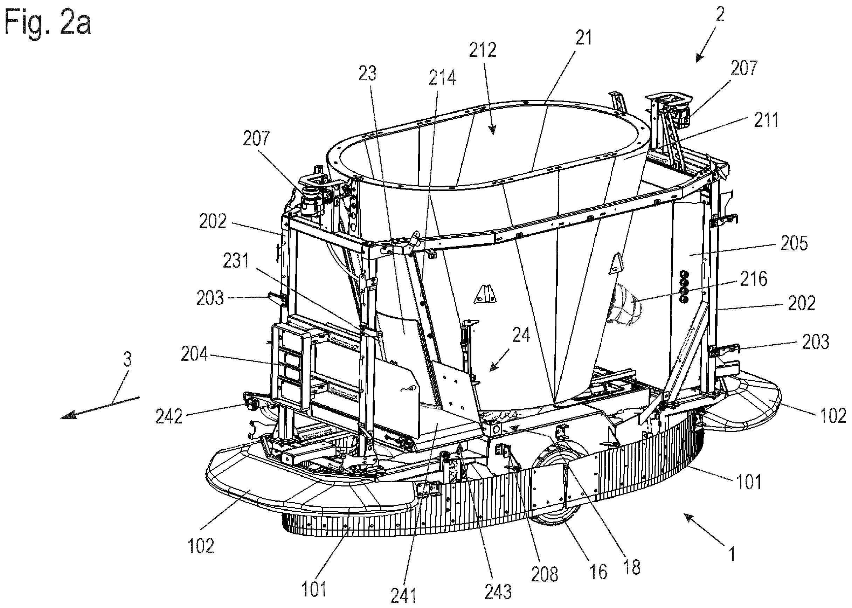

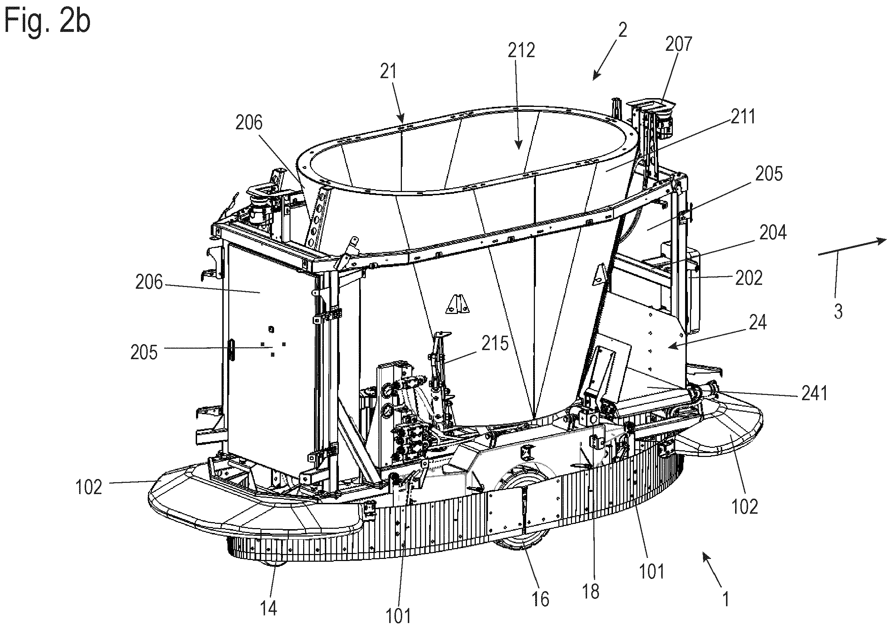

In den Figuren 2a und 2b ist in gleicher Weise wie in den Figuren 1a und 1b der Fahrroboter aus identischen Blickrichtungen dargestellt, wobei jedoch die Verkleidung 20 abgenommen wurde, um den inneren Aufbau des Fahrroboters besser darstellen zu können.

Neben den bereits in den Figuren 1a und 1b erkennbaren Komponenten ist in diesen Darstellungen ersichtlich, dass der Aufbau 2 Traggestelle 202 aufweist, an denen beispielsweise die Verkleidungsplatten 201 über Ausleger 203 befestigt sind. An den Traggestellen 202 sind auch die Ladekontakte 204 befestigt. Auf der in Fahrtrichtung gesehen hinteren Seite ist an dem entsprechenden Traggestell 202 ein Schaltkasten 206 montiert, der elektrische Steuereinrichtungen zum Ansteuern von Antriebs- und Arbeitsorganen und zum Auswerten der Informationen der verschiedenen Sensoren aufnimmt und an dem auch die Bedien- und/oder Anzeigeelemente 205 angeordnet sind.

Insbesondere in der Figur 2a ist der Aufbau des Futterförderers 24 zu erkennen. Er weist, wie bereits im Zusammenhang mit den Figuren 1a, b erläutert, das Förderband 241 auf, das quer zur Fahrtrichtung ausgerichtet ist und mittels eines Antriebsorgans 242 in beide Richtungen bewegt werden kann.

Das Förderband 241 ist unter einer Auslassöffnung 213 des Mischbehälters 21 angeordnet, die sich in der Vorwärts-Fahrtrichtung vorne am Mischbehälter 21 befindet. Neben der Auslassöffnung 213 ist auf beiden Seiten eine Schiebeführung 214 vorhanden, in der ein Auslassschieber 23 verschiebbar angeordnet ist. Dieser ist mit einem Antriebsorgan 231 verbunden, das im dargestellten Beispiel ein Hydraulikzylinder ist. Es wird angemerkt, dass in alternativen Ausgestaltungen des Fahrroboters auch ein anderer, beispielsweise ein elektromotorischer Antrieb für die Bewegung des Auslassschiebers 23 eingesetzt werden kann. Mittels des Antriebsorgans 231 kann der Auslassschieber nach unten verfahren werden, so dass er die Auslassöffnung 213 abdeckt oder eben angehoben werden, um die Auslassöffnung 213 freizulegen. Durch die Auslassöffnung 213 kann sich im Mischbehälter 21 befindendes Futter dann auf das Förderband 241 gelangen und zu einer der beiden Seiten ausgebracht werden. Es stehen somit zwei Abwurfbereiche 243 für zu verteilendes Futter zur Verfügung. Im dargestellten Beispiel ist auch das Antriebsorgan 242 für das Förderband 241 hydraulisch betätigt, also durch einen Hydraulikmotor gebildet. Auch an dieser Stelle kann in alternativen Ausgestaltungen des Fütterungsroboters eine andere Antriebsart, beispielsweise ein elektromotorischer Antrieb eingesetzt werden.

Die Darstellungen der Figuren 2a und 2b zeigen zudem, dass der Mischbehälter die Form eines nach oben offenen Kegelstumpfes mit im unteren Bereich rundem Querschnitt aufweist, der sich nach oben hin zu einem ovalen Querschnitt im oberen Bereich aufweitet. Der Mischbehälter 21 ist nach oben offen, so dass eine große Einfüllöffnung 212 bereitgestellt wird. Wie der Vergleich mit den Figuren 1a und 1b zeigt, ist diese Einfüllöffnung 212 auch im Wesentlichen in ihrer gesamten Größe in der Verkleidung 20 ausgespart.

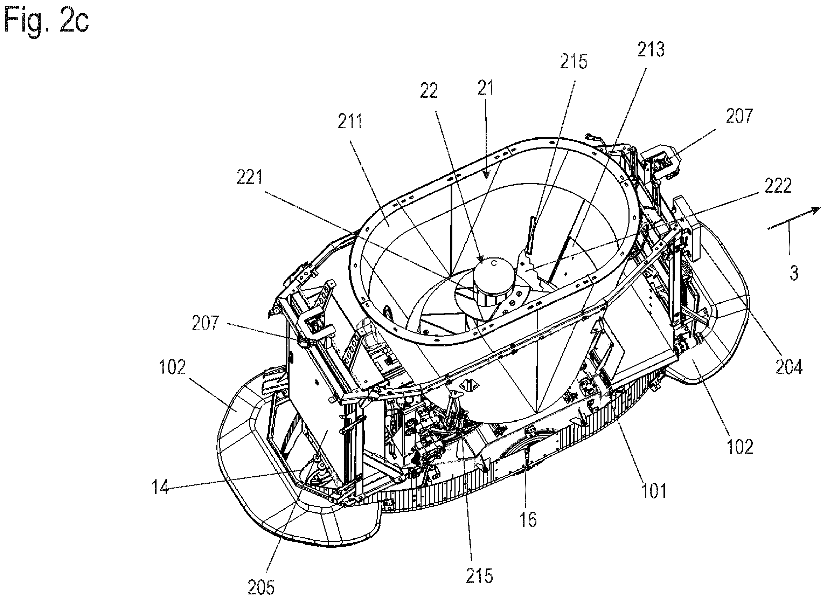

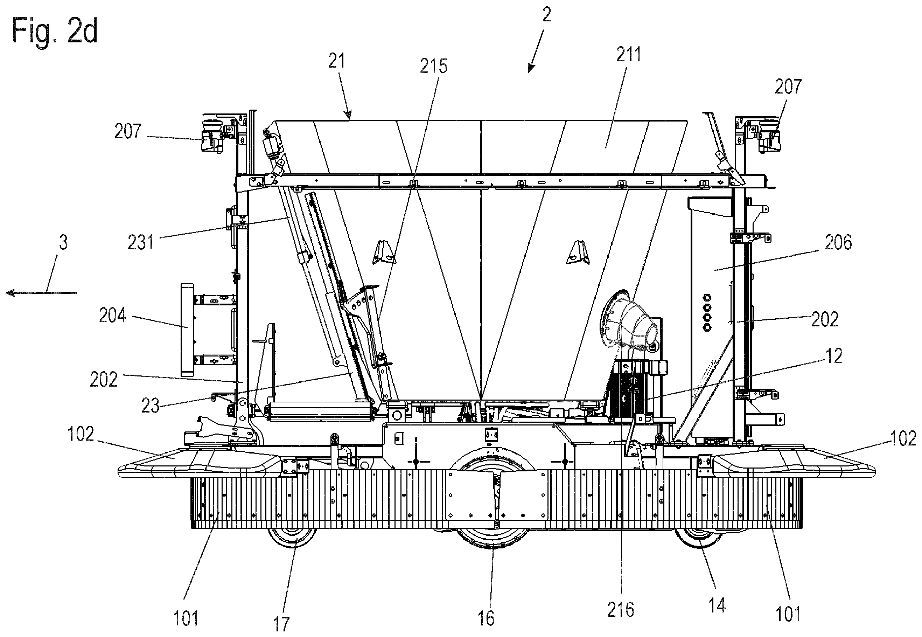

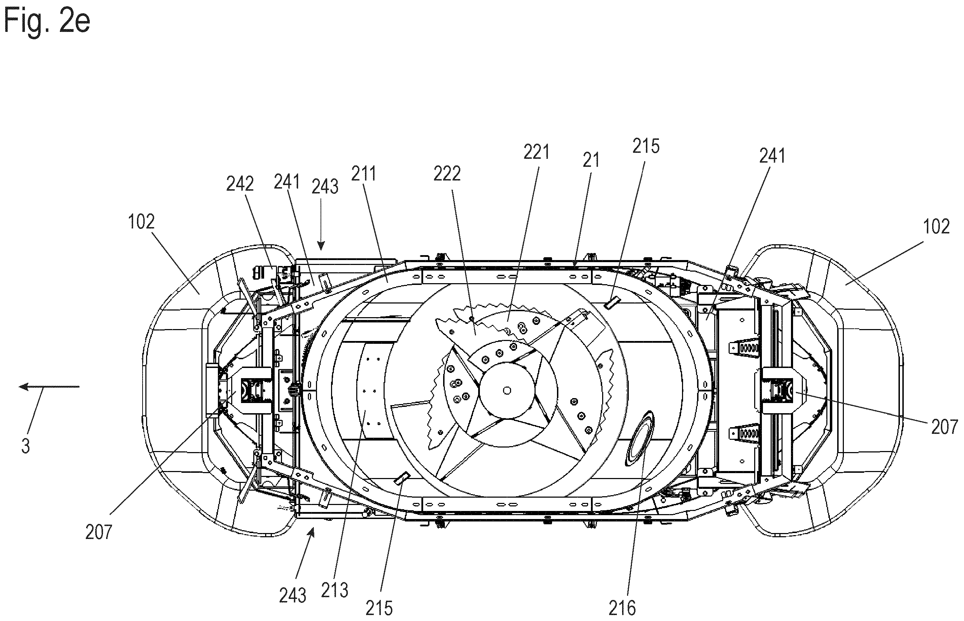

In den Figuren 2c und 2d ist der Fütterungsroboter in einer Ansicht von schräg oben bzw. in einer Seitenansicht wiedergegeben. Die Figuren 2e und 2f geben den Fütterungsroboter in der Draufsicht von oben bzw. unten wieder.

Die Ansicht von oben in der Figur 2e zeigt im Wesentlichen den Einblick in den Mischbehälter 21. Unten zentral im Mischbehälter 21 ist als Teil einer Mischeinrichtung 22 eine Mischschnecke 221 angeordnet. Diese kann durch ein hier nicht sichtbares Antriebsorgan in Rotation versetzt werden, wodurch aufgenommenes Futter zum einen gemischt und zum anderen zerkleinert wird. Um eine Zerkleinerung zu erreichen, weist die Mischschnecke 221 außen auswechselbare Messer 222 auf, um das Futter besser zerkleinern zu können. Alternativ können Ränder der Mischschnecke 221 zumindest abschnittsweise geschärft sein, so dass sie wie Schneidmesser wirken. Weiter alternativ oder zusätzlich können unterhalb und/oder oberhalb der Mischschnecke 221 separate, radial nach außen weisende Messer angeordnet sein. Der Misch- bzw. Zerkleinerungsvorgang des Futters im Mischbehälter 21 kann dabei über den Futtersensor 216 nachgehalten oder auch gesteuert werden. Der Futtersensor 216 kann beispielsweise ein optisch arbeitender Homogenitätssensor sein.

Beim dargestellten Ausführungsbeispiel ist eine Mischschnecke 221 im Mischbehälter 21 vorgesehen. In alternativen Ausgestaltungen des Fütterungsroboters können mehrere, gegebenenfalls gleich große oder auch unterschiedlich große Mischschnecken, bevorzugt in Fahrtrichtung hintereinanderliegend, vorgesehen sein. Das Antriebsorgan kann z.B. ein Elektromotor oder auch ein Hydraulikmotor sein.

In der Ansicht von unten in Fig. 2f sind alle vier Räder des Fahrgestells 1 zu erkennen, die beiden entlang einer Achse angeordneten Antriebsräder 16, ein Schwenkrad 14 und ein weiteres Schwenkrad 17. Das Schwenkrad 14 und das weitere Schwenkrad 17 sind passive Räder, die sich bei fahrendem Fahrroboter mitbewegen und auch passiv eine Schwenkbewegung um eine Vertikalachse ausführen. Angetrieben und auch gesteuert wird der Fahrroboter ausschließlich durch die Antriebsräder 16, wobei jedem Antriebsrad 16 ein separat ansteuerbarer Antriebsmotor zugeordnet ist, wodurch der Fahrroboter gelenkt werden kann.

Weiter ist in der Figur 2f zu erkennen, dass die Schürze 101 das Fahrgestell 1 im unteren, bodennahen Bereich umlaufend in etwa in der Form einer Ellipse umgibt. Diese Formgebung bietet die Möglichkeit, den Fütterungsroboter auch zu verwenden, um bereits entlang beispielsweise einer Futtergasse ausgebrachtes Futter im Vorbeifahren zur Seite zu schieben. Dadurch kann der Fütterungsroboter auch die Funktion eines sog. "Futterschiebers" übernehmen, mit dem Futter beispielsweise wieder näher an ein Fressgitter herangeschoben werden kann. Zu dem Zweck ist die Schürze 101 bevorzugt zweiteilig ausgebildet und weist einen vorderen und einen hinteren Abschnitt auf. Beide Abschnitte sind dann unabhängig voneinander anhebbar bzw. bodennah absenkbar. Zum Zusammenschieben des Futters wird der jeweils in der aktuellen Fahrtrichtung vorne liegende Abschnitt abgesenkt und der in Fahrtrichtung hinten liegende Abschnitt angehoben. Im normalen Fahrbetrieb werden beide Abschnitte angehoben, wie beispielsweise in den Figuren 1 a, b gezeigt ist.

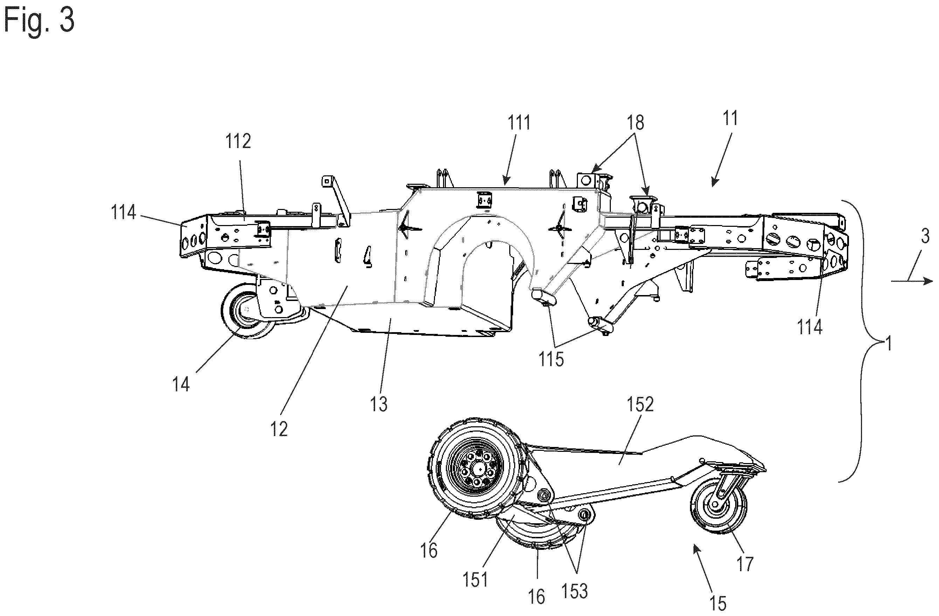

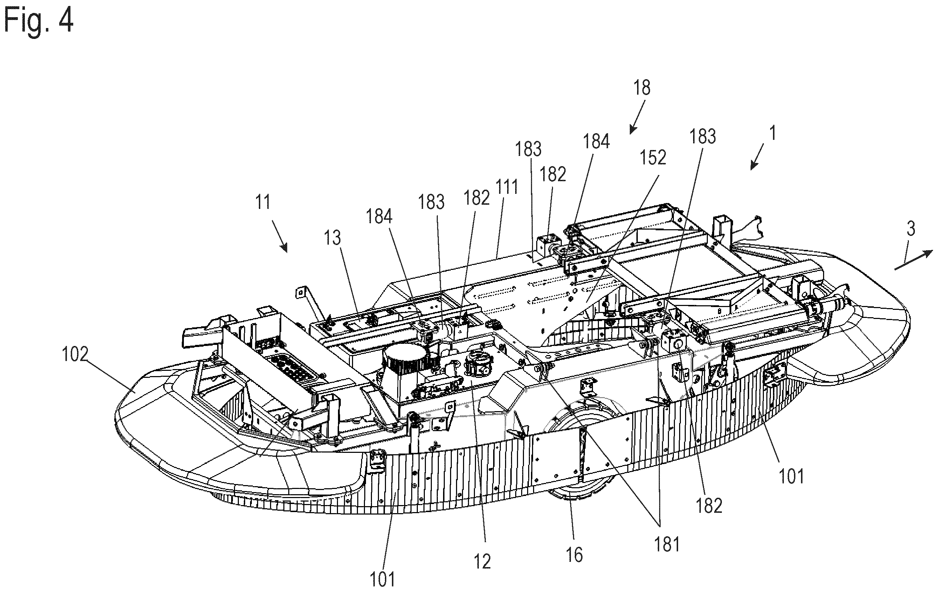

Der genaue Aufbau des Fahrgestells 1 und auch die Art und Weise, wie sich die verschiedenen Räder, Antriebsräder 16 und die Schwenkräder 14 und 17 zueinander bewegen können, um Bodenunebenheiten auszugleichen, wird nachfolgend im Zusammenhang mit den Figuren 3 und 4 erläutert.

Figur 3 zeigt zu diesem Zweck das Fahrgestell 1 ohne den Aufbau 2 und auch ohne die Schürze 101 und die Stoßstangen 102 in Art einer Explosionsansicht mit Blick von schräg unten.

Aus dieser Darstellung wird ersichtlich, dass das Fahrgestell 1 ein Aufliegerchassis 11 umfasst, das auf einem Zugchassis 15 aufliegt. Das Aufliegerchassis 11 erstreckt sich mit einem Tragrahmen 111 mittels Längsträgern 112 im Wesentlichen über die gesamte Länge des Fahrroboters. Am vorderen und hinteren Ende sind an den Längsträgern 112 Stoßstangenhalter 114 angeordnet, die die Stoßstangen 102 tragen . Neben dem Aufbau, der von dem Aufliegerchassis 11 getragen wird, weist dieses noch Bauraum für ein Hydraulikaggregat 12 sowie Batterien 13 auf. Diese sind in einer kastenförmigen Struktur unterhalb bzw. zwischen den Längsträgern 112 angeordnet.

Das Aufliegerchassis 11 umfasst das Schwenkrad 14 als einziges der insgesamt vier vorhandenen Räder.

Die anderen drei Räder, die Antriebsräder 16 und das weitere Schwenkrad 17 sind in einer dreieckigen Anordnung am Zugchassis 15 montiert. Das Zugchassis 15 umfasst dafür eine Tragstruktur 151, die im Prinzip die Achse bildet, auf der die Antriebsräder 16 angeordnet sind. Diese sind einzeln angetrieben von hier nicht sichtbaren, in der Tragstruktur 151 verborgenen Antriebsmotoren.

Von der Tragstruktur 151 ragt mittig ein Ausleger 152 nach vorne, an dessen vorderem Ende das weitere Schwenkrad 17 montiert ist.

Die drei Räder, die beiden Antriebsräder 16 und das weitere Schwenkrad 17, stellen drei Auflagepunkte des Zugchassis 15 auf den Untergrund dar. Da durch drei Punkte eine Ebene geometrisch bestimmt, aber nicht überbestimmt ist, ist gewährleistet, dass die drei Räder, d.h. die beiden Antriebsräder 16 und das weitere Schwenkrad 17, jederzeit Bodenkontakt haben. Somit wird ein sicherer Antrieb und eine gute Abstützung auch auf einem unebenen Untergrund erreicht.

Das Aufliegerchassis 11 stützt sich an zwei Punkten auf dem Zugchassis 15 ab. Dazu weist das Zugchassis 15 zwei Lageraugen 153 auf, die an Auslegern, die an der Tragstruktur 151 montiert sind, in Längsrichtung gesehen zwischen den Antriebsrädern und dem weiteren Schwenkrad 17 positioniert sind. Die beiden Lageraugen 153 liegen auf einer Achse, die parallel zur Achse der Antriebsräder 16 verläuft. In die Lageraugen 153 greifen Lagerbolzen 115 ein, die an dem Aufliegerchassis 11 montiert sind. Entsprechend kann das Zugchassis 15 um die durch die Lageraugen 153 führende Achse am Aufliegerchassis 11 pendeln. Auf diese Weise können in Längsrichtung bestehende Unebenheiten des Untergrunds von der Kombination aus Aufliegerrchassis 11 und Zugchassis 15 bestmöglich ausgeglichen werden, wobei sicherer Bodenkontakt aller Räder gewährleistet ist.

Figur 4 zeigt das Fahrgestell 1, umfassend das Aufliegerchassis 11 und das Zugchassis 15, im zusammengesetzten Zustand dieser beiden Hauptkomponenten. Zudem ist die als Futterschieber eingesetzte Schürze 101 anmontiert dargestellt. In der Figur 4 sind die im Fahrgestell 1 bereitgestellten Aufnahmeräume für das Hydraulikaggregat 12 und Batterien 13 zu erkennen.

Zudem zeigt die Figur 4 Auflager 18, die der anmeldungsgemäßen Kopplung zwischen dem Fahrgestell 1 und der Funktionseinheit des Aufbaus 2 dienen. Jedes der vorliegend drei Auflager 18 umfasst einen Kraftsensor 183. Diese Kraftsensoren 183 sind auf der Seite des Fahrgestells 1 in Lagerböcken 182 gelagert und stellen zur Funktionseinheit hin jeweils eine Lagerplatte 184 bereit. Es ist vorgesehen, dass relevante Komponenten des Aufbaus 2 auf diesen Lagerplatten 184 montiert sind - vorliegend der Mischbehälter 21 und der Futterförderer 24, die zusammen die Funktionseinheit des Fahrroboters 24 bilden.

Bei dem in den Figuren 1a und 1b sowie 2a-2f gezeigten Fahrroboter, der als Fütterungsroboter ausgebildet ist, ist beispielsweise der gesamte Mischbehälter 21 einschließlich der Mischeinrichtung 22 sowie dem Auslassschieber 23 und dem Futterförderer 24 als ein kompaktes Modul auf den Lagerplatten 184 befestigt.

Durch die Kraftsensoren 183 kann dabei statisch die von der Funktionseinheit auf das Fahrgestell wirkende Gewichtskraft gemessen werden. Bei bekanntem Leergewicht des Aufbaumoduls 2 kann so beispielsweise jederzeit die sich im Mischbehälter 21 befindende Masse an Futter ermittelt werden. Änderungen der Messwerte geben Aufschluss über aufgenommene und/oder abgegebene Futtermengen.

Zum Befüllen des Mischbehälters 21 kann beispielsweise vorgesehen sein, dass der Fahrroboter sich unter einem Silo oder einem Bunker oder einer vergleichbaren Ausgabestelle für Futterkomponenten positioniert und dieses einem übergeordneten Steuerungssystem, z.B. einem Farm-Managementsystem, meldet, insbesondere über eine drahtlose Netzwerkverbindung. Die Futter-Ausgabestelle wird dann vom Steuerungssystem angewiesen, die Futterkomponente abzugeben, die entsprechend in den Mischbehälter 21 gefüllt wird. Währenddessen erfassen die Kraftsensoren 183 eine Gewichtszunahme der Funktionseinheit, die der entsprechenden Futterkomponente zugeordnet werden kann und die dem Steuerungssystem übermittelt wird.

Nähert sich die eingefüllte Menge der vorgesehenen, kann das Steuerungssystem die Befüllungsrate absenken, um dann möglichst korrekt die Befüllung beim Erreichen der vorgesehenen Menge zu stoppen. Ändert sich während des Befüllens das erfasste Gewicht nicht oder zu langsam, kann ein Fehler ausgegeben werden, z.B. dass die Ausgabestelle leer ist oder ihr Auslass verstopft ist. Nachdem alle benötigten Komponenten an einer oder an verschiedenen Ausgabestellen in den Mischbehälter 21 eingefüllt sind, kann der Fütterungsroboter mit der Futterverteilung beginnen. Bereits während des Befüllens und während der Fahrt zu den Futterausgabestellen wird bevorzugt die Mischeinrichtung 22 betrieben, um das Futter zu mischen und ggf. zu zerkleinern.

Zum Ausbringen des Futters wird bei sich drehender Mischschnecke 221 der Auslassschieber 23 geöffnet und das Förderband 241 betrieben. Die ausgegebene Futtermenge insgesamt und pro Zeiteinheit wird über die Kraftsensoren 183 erfasst. In der Regel wird Futter in einem Streifen vor Futtergittern abgeworfen, wobei eine Futtermenge pro Längeneinheit vorgegeben ist. Es werden dann die ausgegebene Futtermenge pro Zeitreinheit und die Fahrgeschwindigkeit des Fütterungsroboters aufeinander abgestimmt, um die gewünschte Futtermenge auszubringen, Die ausgegebene Futtermenge pro Zeiteinheit kann dabei durch die Position des Auslassschiebers 23 und/oder die Drehzahl der Mischschnecke 221 abhängig von den Messwerten der Kraftsensoren 183 variiert werden. Dadurch wird auch der Füllstand des Mischbehälters 21 berücksichtigt. Bei annähernd leerem Mischbehälter 21 wird beispielsweise eine höhere Drehzahl der Mischschnecke 22 benötigt, um den Behälter möglichst restlos zu leeren.

Auch bei der Ausgabe des Futters können die Messwerte zudem genutzt werden, um Systemfehler aufzuspüren, beispielsweise nicht funktionsfähige Antriebe der Mischschnecke 22, des Förderbands 241 und/oder des Auslassschiebers 23. Vor einer Neubefüllung des Mischbehälters 21 kann mithilfe der Kraftsensoren 183 die noch verbliebene Futtermenge überprüft werden und eine Warnung an einen Benutzer ausgegebene werden, wenn die verbliebene Futtermenge zu groß ist, so dass eine ev. nicht gewünschte Vermischung verschiedener Futterrationen erfolgen würde.

Weiter können die Kraftsensoren 183 eingesetzt werden, um sich während des Fahrbetriebs dynamisch ändernde Kräfte bzw. Kräfteverhältnisse zu ermitteln. Diese können Aufschluss geben z. B. über Neigungen des Fahrroboters in Längs- und auch in Querrichtung und auch über Bodenunebenheiten. Weiter können Beschleunigungen erfasst werden, was unterstützend zu odometrischen Daten der Navigation des Fahrroboters dienen kann.

Wie zuvor erläutert, liegt das Gewicht der Funktionseinheit im Betrieb auf den Lagerplatten 184 auf. Es kann eine insofern feste Verbindung vorgesehen sein, als dass sie über nur manuell lösbare Schrauben oder ähnliche Verbindungsmittel erfolgt. Es kann alternativ aber auch vorgesehen sein, dass Aktoren eine Befestigung, beispielsweise eine lösbare Verrastung der Funktionseinheit mit den Lagerplatten 184 automatisch vornehmen können. In einer derartigen Ausgestaltung kann die Funktionseinheit auch automatisiert in einer Wechselstation vom Fahrgestell 1 abgehoben und gegen eine andere, insbesondere auch einer anderen Funktion dienende Funktionseinheit getauscht werden. Die Kraftsensoren 183 können in diesem Zusammenhang zur Überwachung und/oder Steuerung des Kopplungsvorgangs eingesetzt werden.

Neben den Auflagern 18 sind erfindungsgemäß zusätzlich Schwenklager 181 vorhanden, die ebenfalls in Figur 4 zu sehen sind.

Zu Servicezwecken kann vorgesehen sein, dass die Funktionseinheit nicht komplett abgenommen wird, sondern zur Seite gekippt wird, um Zugang zu ansonsten verdeckten Komponenten der Funktionseinheit und/oder sonstigen Teilen des Aufbaus 2 und/oder des Fahrgestells 1 zu erhalten.

Diesem Zweck dienen die Schwenklager 181, die ein Abkippen des Mischbehälters 21 und ggf. fest mit ihm verbundener Komponenten wie der Mischeinrichtung 22, dem Auslassschieber 23 und/oder dem Futterförderer 24 ermöglichen. Dabei kann eine Verbindung zwischen dem Mischbehälter 21 und den Schwenklagern 181 so ausgestaltet sein, dass die Schwenklager 181 erst nach dem Lösen der Verbindung zu den Lagerplatten 184 in Eingriff mit dem Mischbehälter kommt, so dass im normalen Betrieb über die Schwenklager 181 keine Kräfte übertragen werden. Um den Kippvorgang zu erleichtern, kann eine Aktor, z.B. ein Hydraulikzylinder vorhanden sein. Zudem können seitlich Stützen vorgesehen sein, insbesondere ausfahrbare Stützen, um einem Umkippen des Fahrroboters auch bei gekipptem Mischbehälter 21 zu verhindern. Es kann aber auch vorgesehen sein, dass der gekippte Mischbehälter 21 mit seinem Rand auf einen externen Unterbau abgelegt wird.

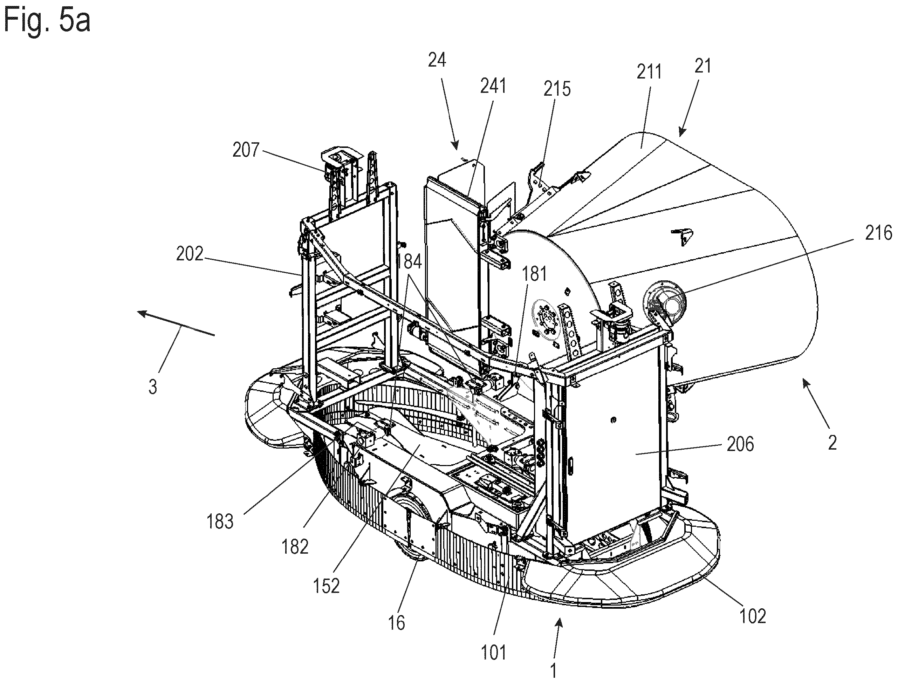

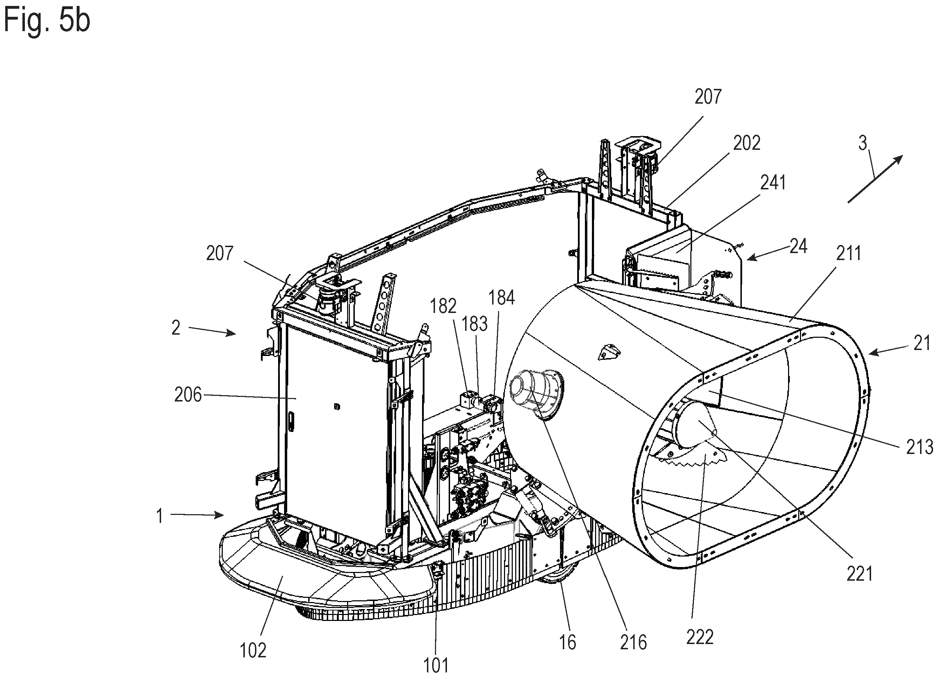

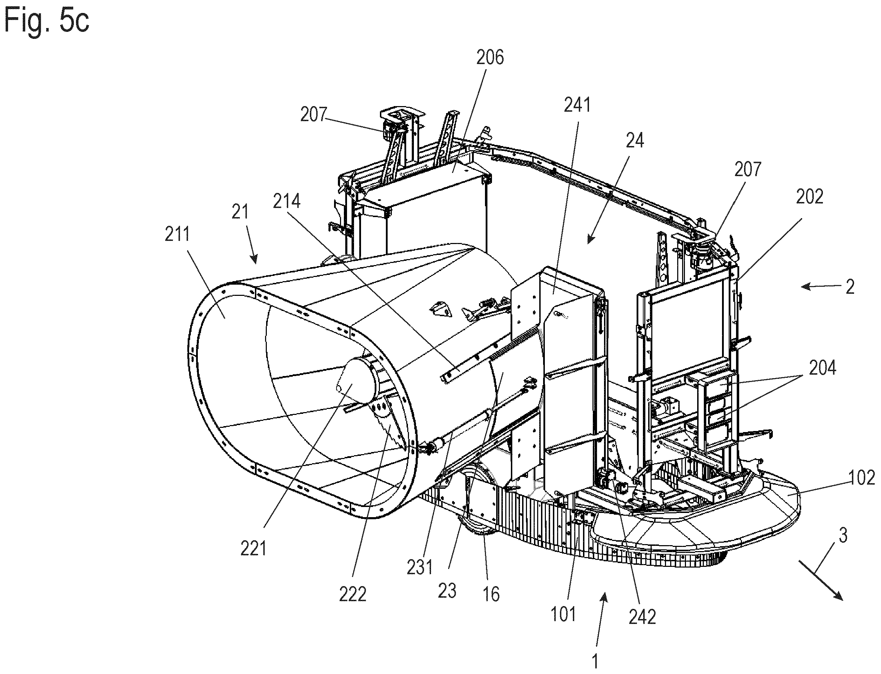

Die Figuren 5a bis 5c zeigen den Fahrroboter der Figuren 1a, 1b und 2a-2f in einem derartigen Servicezustand, in dem die Funktionseinheit, also der Mischbehälter 21 zusammen mit dem Futterförderer 24, auf den Schwenklagern 181 zur Seite abgekippt ist in jeweils einer Schrägansicht aus verschiedenen Blickwinkeln.

Durch den modularen Aufbau mit dem Fahrgestell 1 einerseits und dem Aufbau 2 mit der Funktionseinheit andererseits kann eine flexible Nutzung des Fahrgestells 1 erfolgen, und so der Fahrroboter für mehr als einen Aufgabenzweck innerhalb eines landwirtschaftlichen Betriebs eingesetzt werden.

Neben der hier zuvor beispielhaft gezeigten Verwendung des Fahrroboters als Fütterungsroboter sind z. B. eine Verwendung als Reinigungsroboter, als Roboter zur Entmistung von Stallbereichen, als Einstreuroboter oder allgemein als Transportroboter innerhalb des landwirtschaftlichen Betriebs denkbar.

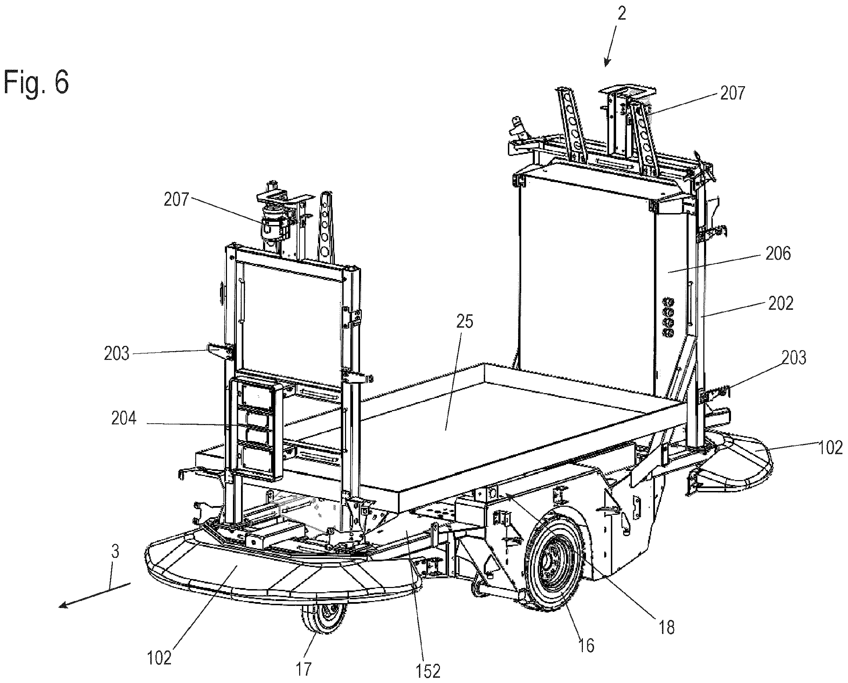

Figur 6 zeigt eine Ausgestaltung eines Fahrroboters als universell nutzbarem Transportroboter. Das Fahrgestell 1 und ein Großteil des Aufbaus 2 entsprechen denen des ersten Ausführungsbeispiels.

Anstelle des Mischbehälters 21 und dem Futterförderer 24, die die Funktionseinheit des ersten Ausführungsbeispiels bilden, ist vorliegend ein Transportboden 25 als Funktionseinheit vorhanden. Der Transportboden 25 liegt auf den Auflagern 18 auf, so dass wiederum Kräfte auf das Fahrgestell über die in der Figur 6 nicht sichtbaren Kraftsensoren 183 erfasst werden können. Bei der hier dargestellten Ausführung ist eine Schürze am Fahrgestellt 1 nicht vorhanden. Optional kann jedoch auch bei einer Ausgestaltung des Fahrroboters als Transportroboter eine als Futterschieber einsetzbare Schürze (vgl. Schürze 101 in den zuvor beschriebenen Figuren) vorhanden sein.

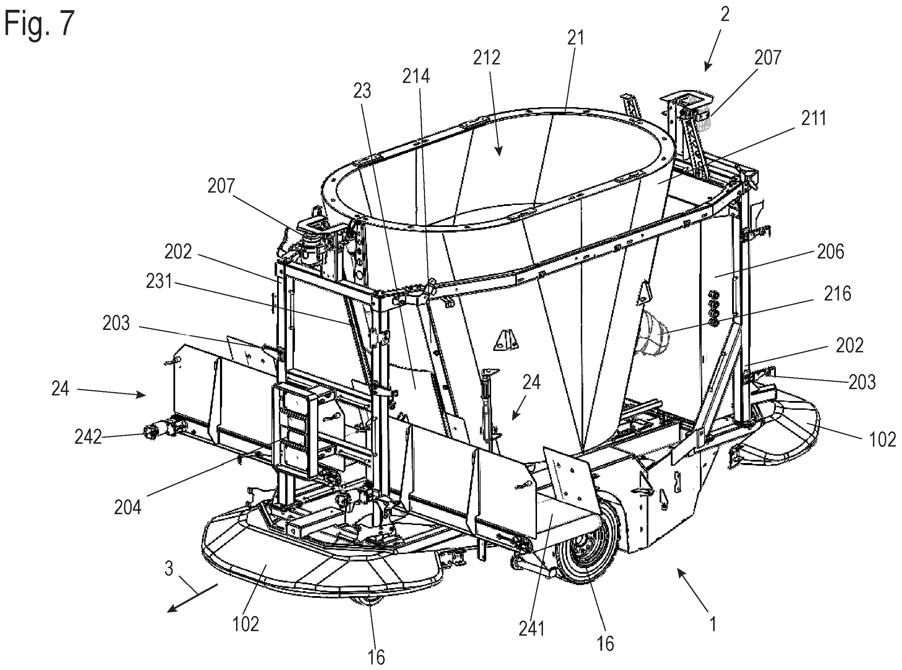

In Figur 7 ist ein Fahrroboter mit wiederum gleichem Fahrgestell 1 für einen weiteren Einsatzzweck dargestellt. Durch die in diesem Beispiel aufgenommene Funktionseinheit wird der Fahrroboter als Einstreuroboter nutzbar. Die Funktionseinheit ähnelt der des ersten Ausführungsbeispiels, indem sie ebenfalls einen Behälter 21 und einen nachgeordneten Förderer 24 mit Förderband 241 aufweist. Der Behälter 21 nimmt Einstreumaterial auf, das über das Förderband 241 in Tierhaltebereiche, z.B. Tierboxen, automatisiert eingestreut werden kann. Um das Einstreumaterial besser bis in die Tierhaltebereiche fördern zu können, ragt das Förderband seitlich weiter über das Fahrgestell 1 heraus als bei dem Fütterungsroboter des ersten Ausführungsbeispiels. Auch hier ist auf eine als Futterschieber einsetzbare Schürze am Fahrgestell verzichtet. Diese könnte natürlich auch vorhanden sein, um den Einstreuroboter zusätzlich zum Zusammenschieben von bereits ausgebrachtem Futter zu verwenden oder auch, wenn der Fahrroboter durch einen Wechsel der Funktionseinheit auch als Fütterungsroboter eingesetzt werden soll.

Neben dem Fahrroboter als "mobile" Plattform kann zusätzlich vorgesehen sein, eine aktuell nicht benötigte Funktionseinheit auf einem stationären Gestell als stationäre Funktionseinheit, z.B. als stationären Futtermischer weiter zu nutzen. Dabei kann es vorgesehen sein, dass die Funktionseinheit vom Fahrgestell 1 automatisiert an das Gestell übergeben wird bzw. von diesem entnommen wird.

### Bezugszeichenliste

- 1: Fahrgestell
10 Verkleidungs- und Schutzelemente
101 Schürze (Futterschieber)
102 Stoßstange
- 11: Aufliegerchassis
111 Tragrahmen
112 Längsträger
113 Querträger
114 Stoßstangenhalter
115 Lagerbolzen
- 12: Hydraulikaggregat
- 13: Batterien
- 14: Schwenkrad
- 15: Zugchassis
151 Tragstruktur
152 Ausleger
153 Lagerauge
- 16: Antriebsrad
- 17: weiteres Schwenkrad
- 18: Auflager
181 Schwenklager
182 Lagerbock
183 Kraftsensor
184 Lagerplatte
- 2: Aufbau
20 Verkleidung
201 Verkleidungsplatten
202 Traggestell
203 Ausleger
204 Ladekontakte
205 Bedien- und/oder Anzeigeelemente
206 Schaltkasten
207 Lidar-Sensor
208 Ultraschallsensor
21 (Misch-) Behälter
211 Wandung
212 Einfüllöffnung
213 Auslassöffnung
214 Schiebeführung
215 Schwert
216 Futtersensor
22 Mischeinrichtung
221 Mischschnecke
222 Messer
223 Antriebsorgan für Mischschnecke
23 Auslassschieber
231 Antriebsorgan für Auslassschieber
24 (Futter-) Förderer
241 Förderband
242 Antriebsorgan für Förderband
243 Abwurfbereich
25 Transportboden
- 3: Richtungspfeil Vorwärts-Fahrtrichtung

## Patentansprüche

1. Fahrroboter für landwirtschaftliche Aufgaben mit einem Fahrgestell (1) und einer Funktionseinheit, die auf dem Fahrgestell austauschbar befestigt ist, wobei das Fahrgestell (1) Auflager (18) bereitstellt, die die Funktionseinheit tragen, wobei für mindestens eines der Auflager (18) ein Kraftsensor (183) vorhanden ist, der eine durch die Funktionseinheit auf das Fahrgestell (1) ausgeübte Kraft erfasst, **dadurch gekennzeichnet, dass** zusätzlich zu den Auflagern (18) mindestens ein Schwenklager (181) zwischen dem Fahrgestell (1) und der Funktionseinheit vorhanden ist, das bedarfsweise einsetzbar ist, um das Funktionseinheit bei gelöster Verbindung zu den Auflagern (18) auf dem Fahrgestell (1) zu kippen.

2. Fahrroboter nach Anspruch 1, bei dem mindestens drei Auflager (18) vorhanden sind, denen jeweils ein Kraftsensor (183) zugeordnet ist.

3. Fahrroboter nach Anspruch 1 oder 2, bei dem die von der Funktionseinheit auf das Fahrgestell (1) wirkende Kraft im Wesentlichen vollständig über die Auflager (18) führt.

4. Fahrroboter nach einem der Ansprüche 1 bis 3, bei dem die Auflager (18) Lagerplatten (184) aufweisen.

5. Fahrroboter nach einem der Ansprüche 1 bis 4, bei dem eine Verbindung zwischen den Auflagern (18) und der Funktionseinheit über Aktoren angesteuert geschlossen und/oder gelöst werden kann.

6. Fahrroboter nach einem der Ansprüche 1 bis 5, bei dem ein Antrieb vorhanden ist, um die Funktionseinheit auf dem Fahrgestell (1) zu kippen.

7. Fahrroboter nach einem der Ansprüche 1 bis 6, bei dem das Fahrgestell (1) ein Aufliegerchassis (11) aufweist und ein Zugchassis (15), wobei das Aufliegerchassis (11) in einem Schwenklager auf dem Zugchassis (15) aufliegt.

8. Fahrroboter nach Anspruch 7, bei dem das Aufliegerchassis (11) ein Schwenkrad (14) aufweist.

9. Fahrroboter nach Anspruch 7 oder 8, bei dem das Zugchassis (15) mindestens zwei Antriebsräder (16) und ein weiteres Schwenkrad (17) aufweist.

10. Fahrroboter nach einem der Ansprüche 1 bis 9, ausgebildet als Fütterungsroboter, wobei die Funktionseinheit mindestens einen Behälter zur Aufnahme von Futter aufweist.

11. Fahrroboter nach Anspruch 10, bei dem der Behälter als Mischbehälter (21) ausgebildet ist und eine Mischeinrichtung (22) aufweist.

12. Fahrroboter nach Anspruch 10 oder 11, bei dem der Behälter mit einem Futterförderer (24) gekoppelt ist, um Futter aus dem Behälter auszubringen.

13. Fahrroboter nach Anspruch 12, bei dem der Futterförderer (24) ein Förderband (241) umfasst.

14. Fahrroboter nach einem der Ansprüche 1 bis 9, ausgebildet als Reini-
gungsroboter, als Einstreuroboter oder als universeller Transportroboter.

## Claims

1. Driving robot for agricultural tasks having a chassis (1) and a functional unit which is interchangeably mounted on the chassis, the chassis (1) providing supports (18) which carry the functional unit, wherein a force sensor (183) that detects a force exerted on the chassis (1) by the functional unit is provided for at least one of the supports (18), **characterized in that** in addition to the supports (18) at least one pivot bearing (181) is provided between the chassis (1) and the functional unit, which pivot bearing can be used as required in order to tilt the functional unit on the chassis (1) when the connection to the supports (18) is released.

2. Driving robot according to claim 1, in which at least three supports (18) are present, each of which is assigned a force sensor (183).

3. Driving robot according to claim 1 or 2, in which the force exerted by the functional unit on the chassis (1) passes essentially completely via the supports (18).

4. Driving robot according to any one of claims 1 to 3, wherein the supports (18) comprise bearing plates (184).

5. Driving robot according to any one of claims 1 to 4, wherein a connection between the supports (18) and the functional unit can be closed and/or released in an actuated manner via actuators.

6. Driving robot according to any one of claims 1 to 5, in which a drive is provided in order to tilt the functional unit on the chassis (1).

7. Driving robot according to one of claims 1 to 6, in which the chassis (1) has a semi-trailer chassis (11) and a towing chassis (15), wherein the semi-trailer chassis (11) rests in a pivot bearing on the towing chassis (15).

8. Driving robot according to claim 7, in which the semi-trailer chassis (11) has a swivel wheel (14).

9. Driving robot according to claim 7 or 8, in which the towing chassis (15) has at least two drive wheels (16) and a further swivel wheel (17).

10. Driving robot according to one of claims 1 to 9, designed as a feeding robot, wherein the functional unit has at least one container for holding feed.

11. Driving robot according to claim 10, in which the container is designed as a mixing container (21) and has a mixing device (22).

12. Driving robot according to claim 10 or 11, in which the container is coupled to a feed conveyor (24) for discharging feed from the container.

13. Driving robot according to claim 12, wherein the feed conveyor (24) comprises a conveyor belt (241).

14. Driving robot according to any one of claims 1 to 9, designed as a cleaning robot, as a bedding robot or as a universal transport robot.

## Revendications

1. Robot roulant pour travaux agricoles avec un châssis (1) et une unité fonctionnelle qui est fixée de manière échangeable sur le châssis, dans lequel le châssis (1) fournit des supports (18) qui portent l'unité fonctionnelle, dans lequel un capteur de force (183) est prévu pour au moins un des supports (18) et détecte une force exercée sur le châssis (1) par l'unité fonctionnelle, **caractérisé en ce que**, outre les supports (18), au moins un palier pivotant (181) est prévu entre le châssis (1) et l'unité fonctionnelle, lequel peut être utilisé si besoin pour basculer l'unité fonctionnelle sur le châssis (1) si la connexion aux supports (18) est relâchée.

2. Robot roulant selon la revendication 1, dans lequel au moins trois supports (18) sont prévus et auxquels à chaque fois un capteur de force (183) est associé.

3. Robot roulant selon la revendication 1 ou 2, dans lequel la force agissant sur le châssis (1) depuis l'unité fonctionnelle est dirigée sensiblement entièrement sur les supports (18).

4. Robot roulant selon l'une des revendications 1 à 3, dans lequel les supports (18) présentent des semelles d'appui (184).

5. Robot roulant selon l'une des revendications 1 à 4, dans lequel une connexion entre les supports (18) et l'unité fonctionnelle peut être fermée et/ou relâchée de manière commandée par le biais d'actionneurs.

6. Robot roulant selon l'une des revendications 1 à 5, dans lequel un entraînement est prévu pour basculer l'unité fonctionnelle sur le châssis (1).

7. Robot roulant selon l'une des revendications 1 à 6, dans lequel le châssis (1) présente un châssis de semi-remorque (11) et un châssis de traction (15), dans lequel le châssis de semi-remorque (11) repose sur le châssis de traction (15) dans un palier pivotant.

8. Robot roulant selon la revendication 7, dans lequel le châssis de semi-remorque (11) présente une roue pivotante (14).

9. Robot roulant selon la revendication 7 ou 8, dans lequel le châssis de traction (15) présente au moins deux roues motrices (16) et une roue pivotante (17) supplémentaire.

10. Robot roulant selon l'une des revendications 1 à 9, conçu sous la forme d'un robot d'alimentation, dans lequel l'unité fonctionnelle présente au moins un contenant pour recevoir des aliments.

11. Robot roulant selon la revendication 10, dans lequel le contenant est conçu sous la forme d'un contenant de mélange (21) et présente un moyen de mélange (22).

12. Robot roulant selon la revendication 10 ou 11, dans lequel le contenant est couplé à un distributeur d'aliments (24) pour sortir les aliments du contenant.

13. Robot roulant selon la revendication 12, dans lequel le distributeur d'aliments (24) comprend une bande transporteuse (241).

14. Robot roulant selon l'une des revendications 1 à 9, conçu sous la forme d'un robot de nettoyage, d'un robot de litière ou d'un robot de transport universel.
